(19) Europäisches Patentamt / European Patent Office / Office européen des brevets

(11) **EP 4 407 054 A1**

(12) **EUROPEAN PATENT APPLICATION**
published in accordance with Art. 153(4) EPC

(43) Date of publication:
**31.07.2024 Bulletin 2024/31**

(21) Application number: **22872983.6**

(22) Date of filing: **22.09.2022**

(51) International Patent Classification (IPC):
**C22B 1/16** (2006.01)    **C21B 13/02** (2006.01)
**C22B 1/14** (2006.01)

(52) Cooperative Patent Classification (CPC):
**C21B 13/02; C22B 1/14; C22B 1/16;** Y02P 10/20

(86) International application number:
**PCT/JP2022/035380**

(87) International publication number:
**WO 2023/048232 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.09.2021  JP 2021155671**

(71) Applicant: **NIPPON STEEL CORPORATION**
**Chiyoda-ku**
**Tokyo 100-8071 (JP)**

(72) Inventor: **MIZUTANI, Moritoshi**
**Tokyo 100-8071 (JP)**

(74) Representative: **Vossius & Partner**
**Patentanwälte Rechtsanwälte mbB**
**Siebertstrasse 3**
**81675 München (DE)**

(54) **AGGLOMERATED ORE AND METHOD FOR PRODUCING SAME**

(57)    There is provided an agglomerated ore that is a molded product obtained by mixing a plurality of types of particles, in which the plurality of types of particles include at least iron carbide particles and iron oxide particles, in which at least some of the iron oxide particles are exposed on a surface layer of the agglomerated ore, in which the porosity of the agglomerated ore is 20% or more and 40% or less, in which the ratio of the total mass of metallic iron and iron in iron carbide to the mass of total iron contained in the agglomerated ore is 40 mass% or more and 80 mass% or less, and in which the concentration of carbon including carbon in the iron carbide particles is 1.0 mass% or more and 4.5 mass% or less.

FIG. 7

**Description**

[Technical Field]

The present invention relates to an agglomerated ore used in a blast furnace and a method for producing the agglomerated ore.

Priority is claimed on Japanese Patent Application No. 2021-155671, filed September 24, 2021, the content of which is incorporated herein by reference.

[Background Art]

Patent Document 1 describes a blast furnace agglomerated ore in which particles with a diameter of 1 mm or less are agglomerated so that the porosity is 20% or more and 40% or less, the metallization rate of the agglomerated ore is 40 mass% or more and 80 mass% or less, and the distribution of the metallization rate inside the agglomerated ore is uniform. According to this blast furnace agglomerated ore, it is possible to increase the crushing strength and to obtain excellent reducibility.

[Citation List]

[Patent Document]

[Patent Document 1]
Japanese Unexamined Patent Application, First Publication No. 2014-80649
[Patent Document 2]
Japanese Unexamined Patent Application, First Publication No. H8-253801

[Summary of the Invention]

[Problems to be Solved by the Invention]

An object of the present invention is to provide an agglomerated ore that has better reducibility than conventional agglomerated ores.

[Means for Solving the Problem]

(1) An agglomerated ore according to Aspect 1 of the present invention is a molded product obtained by mixing a plurality of types of particles, in which the plurality of types of particles include at least iron carbide particles and iron oxide particles, and in which at least some of the iron oxide particles are exposed on a surface layer of the agglomerated ore. The porosity of the agglomerated ore is 20% or more and 40% or less. The ratio of the total mass of metallic iron and iron in iron carbide to the mass of total iron contained in the agglomerated ore is 40 mass% or more and 80 mass% or less. The concentration of carbon including carbon in the iron carbide particles is 1.0 mass% or more and 4.5 mass% or less.
(2) In Aspect 2 of the present invention, the plurality of types of particles may include metallic iron particles in the agglomerated ore of Aspect 1.
(3) A method for producing an agglomerated ore according to Aspect 3 of the present invention includes a reduction step, a carbonization step, a crushing step and a briquetting step. In the reduction step, a raw material ore is reduced to produce a reduced ore in which the ratio of the total mass of metallic iron and iron in iron carbide to the mass of total iron is 40 mass% or more and 80 mass% or less. In the carbonization step, the reduced ore is carbonized to produce a carbonized ore having a carbon concentration of 1.0 mass% or more and 4.5 mass% or less. In the crushing step, the carbonized ore is crushed, and the crushed carbonized ore is separated using a sieve mesh with a sieve size of 0.5 mm, and at least iron carbide particles and iron oxide particles are produced. In the briquetting step, at least iron carbide particles and iron oxide particles are mixed and molded using a briquettingbriquetting machine to produce an agglomerated ore having a porosity of 20% or more and 40% or less.
(4) In Aspect 4 of the present invention, in the crushing step, in addition to the iron carbide particles and iron oxide particles, metallic iron particles may be produced in the method for producing an agglomerated ore of Aspect 3.

(5) In Aspect 5 of the present invention, the reduction step and the carbonization step may be performed in one shaft furnace in the method for producing an agglomerated ore according to Aspect 3 or Aspect 4.

[Effects of the Invention]

The agglomerated ore of the present disclosure has better reducibility than conventional agglomerated ores. In addition, according to the method for producing an agglomerated ore of the present disclosure, an agglomerated ore that has better reducibility than conventional agglomerated ores is obtained.

[Brief Description of Drawings]

FIG. 1 is a flowchart illustrating a method for producing an agglomerated ore according to the present embodiment.

FIG. 2 is a schematic view showing an internal structure of a reduced ore produced in a reduction step.

FIG. 3 is a schematic view showing an internal structure of a carbonized ore produced in a carbonization step.

FIG. 4 is a schematic view of a system (an example) that performs a reduction step and a carbonization step using a shaft furnace.

FIG. 5 is a schematic view of a system (an example) that performs a reduction step and a carbonization step using a shaft furnace.

FIG. 6 is a schematic view showing particles (metallic iron particles, iron oxide particles and iron carbide particles) produced in a crushing step.

FIG. 7 is a schematic view showing an internal structure of an agglomerated ore produced in a briquetting step.

FIG. 8 is a diagram showing carbon concentrations (examples, comparative examples and a reference example).

[Embodiment(s) for implementing the Invention]

(Configuration of agglomerated ore)

An agglomerated ore according to the present embodiment is used in a blast furnace, and specifically, it is charged into a blast furnace together with an iron source such as a sintered ore, pellets, and a lump ore. The agglomerated ore according to the present embodiment has all of the following configurations (A) to (F).

(A) An agglomerated ore is a molded product obtained by mixing a plurality of types of particles.

(B) The plurality of types of particles include at least iron carbide particles and iron oxide particles.

(C) At least some of the iron oxide particles are exposed on a surface layer of the agglomerated ore.

(D) The porosity of the agglomerated ore is 20% or more and 40% or less.

(E) The ratio of the total mass of metallic iron and iron in iron carbide to the mass of total iron contained in the agglomerated ore is 40 mass% or more and 80 mass% or less.

(F) The concentration of carbon including carbon in the iron carbide particles is 1.0 mass% or more and 4.5 mass% or less.

(Configurations A to C)

The agglomerated ore according to the present embodiment is a molded product obtained by briquetting a mixture in which a plurality of types of particles are mixed using a briquetting machine. A molded product can be obtained by mixing a plurality of types of particles, and applying a compression force to this mixture using a briquetting machine. The shape of the molded product is not particularly limited, and for example, a spherical shape can be used.

The plurality of types of particles include at least iron carbide particles and iron oxide particles. The maximum diameter of each of the iron carbide particles and iron oxide particles is preferably 0.5 mm or less. "Particles with a maximum diameter of 0.5 mm or less" refers to particles obtained by sieving using a sieve with a sieve size of 0.5 mm. Even if the sieve size is 0.5 mm or less, particles with a diameter (particle size) of 0.5 mm or more may be included depending on the particle shape. In this case, it is sufficient for the particle size of 95% of all particles to be 0.5 mm or less. As a method for evaluating particles in the agglomerated ore, there is, for example, a method in which a cross section of an agglomerated ore is imaged under an optical microscope or an electron microscope, and also the element concentration of each particle is obtained using energy dispersive X-ray spectroscopy (EDS) and an electronic probe microanalyzer (EPMA), iron carbide particles and iron oxide particles are identified from the brightness and element concentration of particle images, and additionally, the maximum diameter of all particles is measured by image analysis. Regarding element concentrations of respective particles, if particles have an oxygen concentration of 5 to 28% and an iron concentration off 72 to 95%, they are determined as iron oxide particles, and if particles have a carbon concentration of 1 to 6.7% and an iron concentration of 93.3 to 99%, they are determined as iron carbide particles.

If the maximum diameter of iron carbide particles and iron oxide particles is larger than 0.5 mm (if a sieve size of a sieve size is larger than 0.5 mm), the presence of iron carbide particles makes it difficult to mold using a briquetting machine and it may be difficult to make the agglomerated ore have a desired strength. In addition, as will be described below, in the agglomerated ore according to the present embodiment, when a direct reduction reaction (endothermal reaction) using iron carbide particles and iron oxide particles proceeds, it is possible to lower the temperature of the thenal reserve zone in the blast furnace and to reduce a reducing agent proportion. Here, if the maximum diameter of iron carbide particles and iron oxide particles is larger than 0.5 mm (if a sieve size of a sieve size is larger than 0.5 mm), it becomes difficult for a direct reduction reaction using iron carbide particles and iron oxide particles to proceed.

Therefore, if the maximum diameter of each of the iron carbide particles and iron oxide particles is 0.5 mm or less, it is possible to further improve the moldability and strength of the agglomerated ore, and it can be made easier for a direct reduction reaction using iron carbide particles and iron oxide particles to proceed.

In order to achieve the above effects, the maximum diameter of all particles (particles before briquetting) constituting the agglomerated ore according to the present embodiment is preferably 0.5 mm or less, but as described above, the agglomerated ore may contain particles with a diameter (particle size) larger than 0.5 mm. Specifically, if the amount of particles with a diameter (particle size) larger than 0.5 mm based on the mass of all particles is 5 mass% or less, the above effects can be achieved.

The agglomerated ore may contain metallic iron particles in addition to iron carbide particles and iron oxide particles. The maximum diameter of metallic iron particles is preferably 0.5 mm or less, similar to the iron carbide particles and iron oxide particles. That is, the metallic iron particles are preferably particles obtained by sieving using a sieve with a sieve size of 0.5 mm. Here, as long as the above effects (securing the moldability and strength of the agglomerated ore) are obtained, the agglomerated ore may contain metallic iron particles with a diameter (particle size) larger than 0.5 mm. Here, the total amount of iron carbide particles, iron oxide particles and metallic iron particles with a diameter larger than 0.5 mm based on the mass of all particles is preferably 5 mass% or less.

The agglomerated ore according to the present embodiment may contain a binder in addition to the above particles (iron carbide particles, iron oxide particles, and metallic iron particles). As the binder, non-combustible binders such as cement, quicklime, and corn starch can be used.

Since the agglomerated ore according to the present embodiment is a molded product obtained by mixing at least iron carbide particles and iron oxide particles, the iron carbide particles are exposed on a surface layer of the agglomerated ore or dispersed inside the agglomerated ore. Similarly, the iron oxide particles are exposed on the surface layer of the agglomerated ore or dispersed inside the agglomerated ore. Since the iron oxide particles are exposed on the surface layer of the agglomerated ore, as in Patent Document 1, it is possible to improve the reducibility of the agglomerated ore.

In addition, when the iron oxide particles exposed on the surface layer of the agglomerated ore according to the present embodiment are subjected to a reducing action using a reducing gas that flows in the blast furnace, desorption of oxygen occurs, a chemical change from iron oxide to metallic iron occurs, the density changes (changes from 5.9 $g/cm^3$ to 7.86 $g/cm^3$), and thus pores are generated in the surface layer of the agglomerated ore. The pores can guide and diffuse the reducing gas inside the blast furnace into the agglomerated ore, and can also reduce the iron oxide particles present inside the agglomerated ore. As a result, it is possible to improve the reducibility of the agglomerated ore and to reduce the reducing agent proportion.

In addition, when iron carbide particles and iron oxide particles are mixed, the iron carbide particles can be made to be present around the iron oxide particles, and the iron oxide particles and the iron carbide particles can be brought into contact with each other. Thereby, in a temperature range of 800°C or lower in the blast furnace, as shown in the following Chemical Reaction Formula (A) a direct reduction reaction using iron carbide and iron oxide can proceed.

$$Fe_3C+FeO = 4Fe+CO\cdots \qquad (A)$$

Since the above direct reduction reaction is an endothermal reaction, it is possible to lower the temperature of the thenal reserve zone in the blast furnace and to reduce a reducing agent proportion. In addition, CO gas generated through the direct reduction reaction can reduce an iron source (such as a sintered ore, pellets, and a lump ore) present around the agglomerated ore in the blast furnace.

(Configuration D)

The porosity of the agglomerated ore can be measured according to, for example, standards of JIS M 8716 (1990). If the porosity of the agglomerated ore is higher than 40%, the molded product easily collapses, the agglomerated ore is not able to maintain a predetermined shape, and the reducibility of the agglomerated ore decreases. In addition, if the porosity of the agglomerated ore is lower than 20%, the molded product tends to have a dense structure, the particles clog the briquetting machine, and the reducibility of the agglomerated ore decreases. Therefore, if the porosity of the agglomerated ore is 20% or more and 40% or less, it is possible to improve the reducibility of the agglomerated ore.

(Configuration E)

The mass of total iron T. Fe contained in the agglomerated ore can be measured according to, for example, standards of JIS M 8205 (2000). The mass of metallic iron M. Fe and the mass of iron Fe contained in iron carbide $Fe_3C$ can be measured according to, for example, standards of JIS M 8213 (1995). In the measurement method according to JIS M 8213 (1995), a total amount of the mass of metallic iron M. Fe and the mass of iron Fe contained in iron carbide $Fe_3C$ can be measured, and it is not possible to measure the mass of metallic iron M. Fe and the mass of iron Fe contained in iron carbide $Fe_3C$ in a distinct manner.

The ratio R of the total mass of metallic iron and iron in iron carbide to the mass of total iron in the configuration E is represented by the following Formula (1).

[Math. 1]

$$R = \frac{M.Fe + Fe(Fe_3C)}{T.Fe} \times 100 \qquad \cdots (1)$$

In Formula (1), M. Fe is the mass [g] of metallic iron, $Fe(Fe_3C)$ is the mass [g] of iron Fe contained in iron carbide $Fe_3C$, and T. Fe is the mass [g] of total iron T. Fe contained in the agglomerated ore. The ratio R corresponds to the metallization rate described in Patent Documents 1 and 2.

As described in Patent Document 1, in order for the crushing strength of the agglomerated ore to satisfy the strength (1,000 N) required for use in a blast furnace, the ratio R needs to be at least 40 mass%. In addition, in order to increase the reducibility, the ratio R needs to be at least 40 mass%. That is, the ratio R needs to be 40 mass% or more, but as described in Patent Document 2, if the metallization rate is higher than 80 mass%, since the total energy tends to increase and the reducibility decreases, the ratio R needs to be 80 mass% or less. Here, as described in Patent Document 2, the total energy is a sum of energy required for the blast furnace (energy required for a blast furnace fuel ratio, an air heating furnace, a generated blast furnace gas and ventilation) and energy required for reduction iron (energy required for a reducing gas source unit, agglomeration, transportation, various utilities, facility construction, and maintenance). For the above reason, the ratio R is 40 mass% or more and 80 mass% or less.

(Configuration F)

The carbon concentration of the agglomerated ore can be measured according to, for example, standards of JIS Z 2615 (2015) (gas volumetric method). As described above, since the agglomerated ore contains iron carbide particle, the above carbon concentration also includes the concentration of carbon in the iron carbide particles.

When iron carbide is produced from metallic iron, graphite (C) may be produced in addition to iron carbide, and the agglomerated ore may contain graphite. In this case, the above carbon concentration also includes the graphite concentration. The presence of iron carbide can be confirmed by performing powder X-ray analysis on the agglomerated ore and detecting a $Fe_3C$ phase peak. Here, if a graphite phase peak is also detected, it can be confirmed that the agglomerated ore contains graphite, and if no graphite phase peak is detected, it can be confirmed that the agglomerated ore does not include graphite. On the other hand, quantitative analysis of iron carbide $Fe_3C$ can be performed by Rietveld analysis.

If the carbon concentration is lower than 1.0 mass%, it is not possible to obtain the effect of the present invention (improvement in reducibility). On the other hand, if the carbon concentration is higher than 4.5 mass%, the amount of graphite tends to be larger than the amount of iron carbide, and the presence of graphite makes it difficult to obtain a molded product. That is, even if the agglomerated ore is produced as a molded product, it becomes difficult to maintain the shape of the molded product. For the above reason, the carbon concentration needs to be 1.0 mass% or more and 4.5 mass% or less.

(Method for producing agglomerated ore)

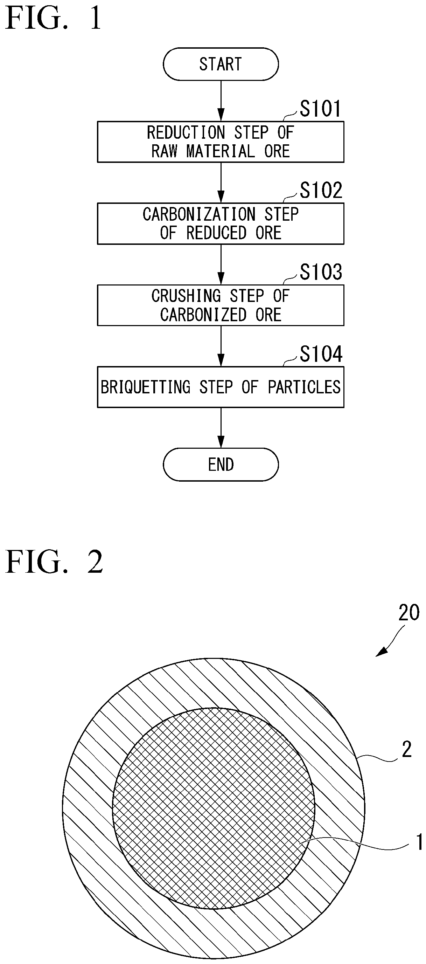

A method for producing an agglomerated ore according to the present embodiment will be described with reference to a flowchart shown in FIG. 1. As shown in FIG. 1, the method for producing an agglomerated ore includes a reduction step S101, a carbonization step S102, a crushing step S103 and a briquetting step S104. Hereinafter, respective steps will be described.

(Reduction step)

In the reduction step S101, a raw material ore is reduced to produce a reduced ore. As the raw material ore, for example, iron ore mainly composed of $Fe_2O_3$ (lump or powder), various types of iron-containing and carbon-containing dust recovered from various dust collecting devices and the like are used, but the present invention is not limited thereto. The lumpy iron ore can be used without changing its form, and iron ore powders and dusts can be used in the form of agglomerated pellets or briquettes.

As the reactor used in the reduction step S101, for example, an Counter current moving bed reactor (shaft furnace), a fluidized bed reactor, or a fixed bed reactor can be used. Then, for example, the reduction step S101 can be performed by supplying a reducing gas to the raw material ore in a temperature environment of 700 to 1,000°C. As the reducing gas, for example, $H_2$, CO, or a mixed gas of $CH_4$ and $N_2$ can be used. In the reduction step S101, a reduced ore is produced so that the above ratio R is 40 to 80 mass%. Here, if the ratio R is outside 40 to 80 mass%, the reducibility decreases. Conditions for reducing the raw material ore so that the ratio R is 40 to 80 mass% can be appropriately set depending on the type of the reducing gas. For example, if the composition of the reducing gas is a mixed gas of $H_2$ gas (90 vol%) and $N_2$ gas (10 vol%), the temperature of the reducing gas may be 980°C, and the treatment time may be 45 min.

According to the reduction step S101, a reduced ore 20 shown in FIG. 2 is produced. In the reduction step S101, the entire raw material ore is reduced to an extent that it does not completely become metallic iron. FIG. 2 is a schematic view showing the internal structure of the reduced ore 20. In the reduction step S101, a reduction reaction proceeds from the surface to the inside of the raw material ore, and the reduced ore 20 has a surface layer part 2 made of metallic iron (Fe) and a center part 1 made of iron oxide (FeO). Here, depending on the conditions of the reduction step S101, the thickness of the surface layer part (metallic iron) 2 changes.

(Carbonization step)

In the carbonization step S102, the reduced ore 20 produced in the reduction step S101 is carbonized to produce a carbonized ore 20A. As the reactor used in the carbonization step S102, for example, an counter current moving bed reactor (shaft furnace), a fluidized bed reactor, or a fixed bed reactor can be used. Then, for example, the carbonization step S102 can be performed by supplying a carbonizing gas to the reduced ore 20 in a temperature environment of 500 to 600°C. For example, if the reaction temperature is 450°C, the carbonization reaction becomes slow, and if the reaction temperature is 650°C, the carbonization reaction is unlikely to occur. Therefore, the reaction temperature is preferably 500°C to 600°C. As the carbonizing gas, for example, $CH_4$ gas, CO gas, or a mixed gas of $CH_4$ and CO can be used. In the carbonization step S102, the carbonized ore 20A is produced so that the carbon concentration is 1.0 mass% or more and 4.5 mass% or less. The temperature during the carbonization reaction may be, for example, the maximum temperature in the reactor. In addition, the treatment time can be appropriately adjusted depending on the temperature during the carbonization reaction. When the temperature is 500°C, the treatment time is, for example, 45 min to 105 min. When the temperature is 550°C, the treatment time is 20 min to 70 min. When the temperature is 600°C, the treatment time is 10 min to 30 min. The time from when the temperature shown in Table 3 becomes stable in a $N_2$ environment and switching to a carbonizing gas is performed until the carbonizing gas is stopped and switching to $N_2$ is performed is defined as the treatment time.

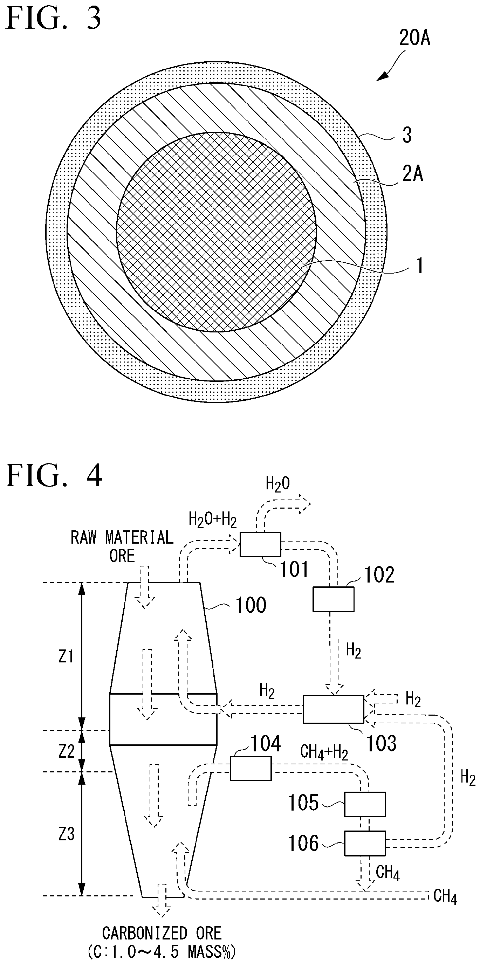

According to the carbonization step S102, the carbonized ore 20A shown in FIG. 3 is produced. FIG. 3 is a schematic view showing the internal structure of the carbonized ore 20A. In the carbonization step S102, a carbonization reaction proceeds from the surface to the inside of the reduced ore 20, and the carbonized ore 20A has a second surface layer part 3 made of iron carbide ($Fe_3C$), an intermediate layer part 2A made of metallic iron (Fe), and a center part 1 made of iron oxide (FeO). Here, depending on the conditions of the carbonization step S102, the entire surface layer part (metallic iron) 2 of the reduced ore 20 is carbonized, and thus the intermediate layer part (metallic iron) 2A may not be present. In addition, depending on the conditions of the carbonization step S102, graphite precipitates may be formed on the surface of the second surface layer part (iron carbide) 3.

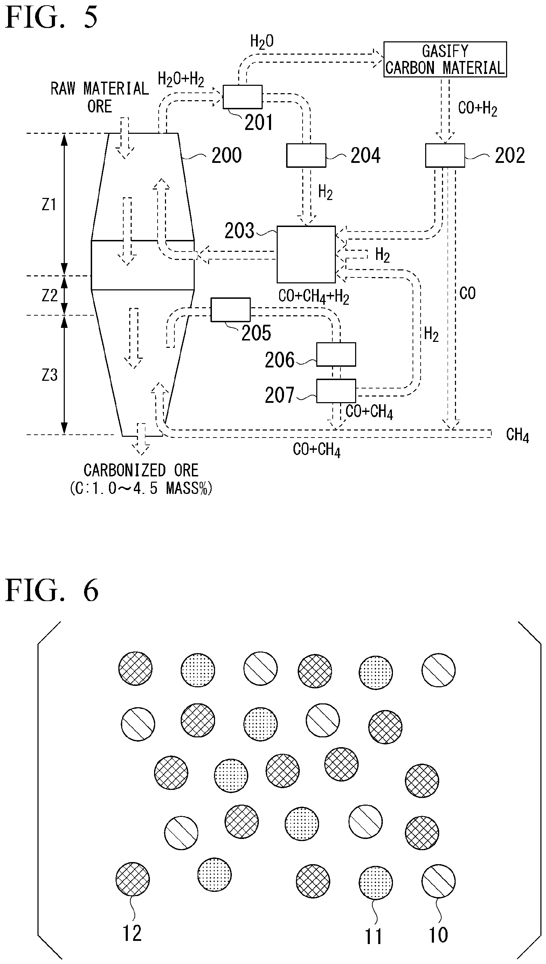

The above reduction step S101 and carbonization step S102 may be performed using separate reactors or may be performed using one reactor. For example, the reduction step S101 and the carbonization step S102 may be performed in one shaft furnace. Hereinafter, a case in which both the reduction step S101 and the carbonization step S102 are performed using one reactor will be described with reference to FIG. 4 and FIG. 5.

In a system (an example) shown in FIG. 4, a raw material ore is charged from the upper part of a shaft furnace (counter current moving bed reactor) 100. Inside the shaft furnace 100, a reduction zone Z1, a transition zone Z2 and a cooling zone Z3 are provided from the upper part to the lower part. The transition zone Z2 is positioned between the reduction zone Z1 and the cooling zone Z3, and is an area that transitions from the reduction zone Z1 to the cooling zone Z3.

In the reduction zone Z1, as shown in the following Reaction Formula (B), the raw material ore is reduced to produce the reduced ore 20. In the following Reaction Formula (B), hydrogen gas ($H_2$) is used as a reducing gas. Here, in the reduction zone Z1, the temperature of the reducing gas can be set to 700 to 1,000°C, and the flow rate of the reducing gas can be set to 1,000 to 1,800 $Nm^3/t$.

$$Fe_2O_3+3H_2 \rightarrow 2Fe+3H_2O \cdots \qquad (B)$$

Water vapors ($H_2O$) and hydrogen gas ($H_2$) are discharged from the upper part of the shaft furnace 100, and the water vapors are removed by a cooler 101. Hydrogen gas that has passed through the cooler 101 is compressed by a compressor 102 and then sent to a heater 103. The heater 103 heats hydrogen gas and then supplies it to the reduction zone Z1 of the shaft furnace 100. In addition to hydrogen gas from the compressor 102, supplementary hydrogen gas can be supplied to the heater 103. Hydrogen gas supplied from the heater 103 to the shaft furnace 100 is used as a reducing gas to reduce the raw material ore.

In the cooling zone Z3, the reduced ore 20 produced in the reduction zone Z1 is carbonized to produce the carbonized ore 20A. The carbonized ore 20A is discharged from the lower part of the shaft furnace 100. In the cooling zone Z3, the temperature of the carbonizing gas can be set to 0 to 100°C, and the flow rate of the carbonizing gas can be set to 100 to 400 $Nm^3/t$. Here, since methane gas ($CH_4$) is used as the carbonizing gas, the reaction shown by the following Reaction Formula (C) proceeds.

$$3Fe+CH_4 \rightarrow Fe_3C+2H_2 \cdots \qquad (C)$$

Methane gas ($CH_4$) and hydrogen gas ($H_2$) are discharged from the cooling zone Z3 of the shaft furnace 100, and supplied to a cooler 104. Methane gas and hydrogen gas that have passed through the cooler 104 are compressed by the compressor 105 and then supplied to a membrane separator 106. In the membrane separator 106, methane gas and hydrogen gas are separated, hydrogen gas is supplied to the heater 103, and methane gas is supplied to the cooling zone Z3 of the shaft furnace 100. In the separation in the membrane separator 106, the pressure can be set to 1.0 to 2.0 MPa, and the temperature can be set to 0 to 100°C. In the cooling zone Z3, in addition to methane gas from the membrane separator 106, supplementary methane gas ($CH_4$) can be supplied.

Next, in a system (an example) shown in FIG. 5, a raw material ore is charged from the upper part of a shaft furnace (counter current moving bed reactor) 200. Inside the shaft furnace 200, the reduction zone Z1, the transition zone Z2 and the cooling zone Z3 are provided from the upper part to the lower part. The transition zone Z2 is positioned between the reduction zone Z1 and the cooling zone Z3 and is an area that transitions from the reduction zone Z1 to the cooling zone Z3.

In the reduction zone Z1, as in the system shown in FIG. 4, the raw material ore is reduced to produce the reduced ore 20. Here, the temperature and flow rate of the reducing gas in the reduction zone Z1 can be set as in the system shown in FIG. 4.

Water vapors ($H_2O$) and hydrogen gas ($H_2$) are discharged from the upper part of the shaft furnace 200, and the water vapors are removed by a cooler 201. The water vapors removed by the cooler 201 are used to gasify a carbon material. Gases (CO, $H_2$) are generated in the gasification of the carbon material, and these gases are separated by a membrane separator 202, hydrogen gas ($H_2$) is supplied to a heater 203, and carbon monoxide gas (CO) is supplied to the cooling zone Z3 of the shaft furnace 200. In the separation in the membrane separator 202, the pressure can be set to 1.0 to 2.0 MPa, and the temperature can be set to 0 to 100°C.

Hydrogen gas that has passed through the cooler 201 is compressed by a compressor 204 and then supplied to the heater 203. The heater 203 heats hydrogen gas and is then supplied to the reduction zone Z1 of the shaft furnace 200. In addition to hydrogen gas from the membrane separator 202 and the compressor 204, supplementary hydrogen gas can be supplied to the heater 203. Hydrogen gas supplied from the heater 203 to the shaft furnace 200 is used as a reducing gas to reduce the raw material ore.

In the cooling zone Z3, the reduced ore 20 produced in the reduction zone Z1 is carbonized to produce the carbonized ore 20A. The carbonized ore 20A is discharged from the lower part of the shaft furnace 200. The temperature and flow rate of the carbonizing gas in the cooling zone Z3 can be set as in the system shown in FIG. 4. Here, since methane gas ($CH_4$) and carbon monoxide gas (CO) are used as the carbonizing gas, the reactions shown in the following Reaction Formulae (D) to (H) proceed.

$$3Fe+CH_4 \rightarrow Fe_3C+2H_2 \cdots \quad (D)$$

$$3Fe+2CO \rightarrow Fe_3C+CO_2 \cdots \quad (E)$$

$$3Fe+CO+H_2 \rightarrow Fe_3C+H_2O \cdots \quad (F)$$

$$CH_4+CO_2 \rightarrow 2CO+2H_2 \cdots \quad (G)$$

$$CH_4+H_2O \rightarrow CO+3H_2O \cdots \quad (H)$$

Gases ($CO$, $CH_4$, $H_2$) are discharged from the cooling zone Z3 of the shaft furnace 200, and supplied to a cooler 205. Gases ($CO$, $CH_4$, $H_2$) that have passed through the cooler 205 are compressed by a compressor 206 and then supplied to a membrane separator 207. In the membrane separator 207, gases ($CO$, $CH_4$) and hydrogen gas ($H_2$) are separated, hydrogen gas is supplied to the heater 203, and gases ($CO$, $CH_4$) are supplied to the cooling zone Z3 of the shaft furnace 200. In the separation in the membrane separator 207, the pressure can be set to 1.0 to 2.0 MPa, and the temperature can be set to 0 to 100°C. In the cooling zone Z3, in addition to carbon monoxide gas ($CO$) from the membrane separator 202 and gases ($CO$, $CH_4$) from the membrane separator 207, supplementary methane gas ($CH_4$) can be supplied.

(Crushing step)

In the crushing step S103, the carbonized ore 20A produced in the carbonization step S102 is crushed to produce iron carbide particles and iron oxide particles. In S103, in addition to the iron carbide particles and iron oxide particles, it is preferable to produce metallic iron particles. FIG. 6 schematically shows iron carbide particles ($Fe_3C$) 11, iron oxide particles ($FeO$) 12 and metallic iron particles ($Fe$) 10 produced after the carbonized ore 20A is crushed.

As described above, when the carbonized ore 20A has the second surface layer part 3 made of iron carbide ($Fe3C$), the intermediate layer part 2A made of metallic iron ($Fe$), and the center part 1 made of iron oxide ($FeO$) (refer to FIG. 3), the iron carbide particles 11 are obtained by crushing the second surface layer part (iron carbide) 3, the metallic iron particles 10 are obtained by crushing the intermediate layer part (metallic iron) 2A, and the iron oxide particles 12 are obtained by crushing the center part ($FeO$). In addition, when the carbonized ore 20A does not contain metallic iron (intermediate layer part) 2A, the iron carbide particles 11 and the iron oxide particles 12 are obtained by crushing the carbonized ore 20A. In addition, when graphite ($C$) precipitates are formed on the surface of the carbonized ore 20A, graphite particles may be obtained by crushing the carbonized ore 20A.

As a method for crushing the carbonized ore 20A, known methods can be appropriately used. For example, using a crushing machine such as a ball mill and a rod mill, the carbonized ore 20A can be crushed. In the crushing step S103, the carbonized ore 20A is crushed so that the particle size of the crushed components (the above iron carbide particles 11, iron oxide particles 12 and metallic iron particles 10) is 0.5 mm or less. In the crushing step S103, next, from the crushed components produced in the crushing step S103 (the above iron carbide particles 11, iron oxide particles 12 and metallic iron particles 10), using a sieve mesh with a sieve size of 0.5 mm, crushed components with a particle size of 0.5 mm or less are separated. The reason why the sieve size of the sieve mesh is set to 0.5 mm or less is that, in the briquetting step S104 to be described below, crushed components with a maximum diameter of 0.5 mm or less (the above iron carbide particles 11, iron oxide particles 12 and metallic iron particles 10) are mixed and molded.

(Briquetting step)

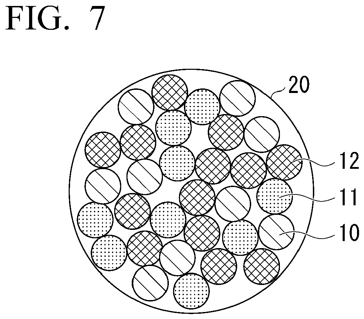

In the briquetting step S104, after the crushed components separated in the crushing step S103 are mixed, briquetting is performed by applying a compression force to this mixture and thus an agglomerated ore is produced. In the briquetting step S104, at least iron carbide particles and iron oxide particles are mixed and molded using a briquetting machine, and thus an agglomerated ore having a porosity of 20% or more and 40% or less is produced. When iron carbide particles and iron oxide particles are mixed, metallic iron particles may be additionally added and mixed. FIG. 7 schematically shows the internal structure of the agglomerated ore produced in the briquetting step S104.

Regarding crushed components to be mixed, it is preferable to use only crushed components with a diameter (particle size) of 0.5 mm or less, but crushed components with a diameter larger than 0.5 mm may be included. Specifically, the amount of the crushed components with a diameter larger than 0.5 mm can be set to 5 mass% or less.

The briquetting machine used in the briquetting step S104 may be any machine that can apply a compression force to the crushed component, and for example, a roll-type briquette briquetting machine can be used. Here, when the crushed component is molded, it is preferable not to use a binder (such as water) that would oxidize metallic iron.

In the briquetting step S104, a compression force is applied to the crushed component mixture so that the porosity of the agglomerated ore as a molded product is 20% or more and 40% or less. Here, since there is a predetermined correlation between the compression force and the porosity of the agglomerated ore, based on this correlation, a compression force may be set so that the porosity of the agglomerated ore is 20% or more and 40% or less. As described above, when the porosity of the agglomerated ore is set to 20% or more and 40% or less, it is possible to improve the reducibility of the agglomerated ore.

In the above reduction step S101, since the reduced ore 20 is produced so that the ratio R is 40 to 80 mass%, also in the agglomerated ore produced through the carbonization step S102, the crushing step S103 and the briquetting step S104, the ratio R is maintained at 40 to 80 mass%. Thereby, it is possible to produce the agglomerated ore with a ratio R of 40 mass% or more and 80 mass% or less.

As described above, when the crushed components (the above iron carbide particles 11, iron oxide particles 12 and metallic iron particles 10) are mixed and molded, as shown in FIG. 7, the iron oxide particles 12 are exposed on the surface layer of the agglomerated ore. Thereby, as described above, the iron oxide particles 12 are reduced with the reducing gas that flows in the blast furnace, and pores can be generated on the surface layer of the agglomerated ore, and the reducibility of the agglomerated ore through these pores can be improved.

In addition, when the crushed components (the above iron carbide particles 11, iron oxide particles 12 and metallic iron particles 10) are mixed, the iron carbide particles 11 can be made to be present around the iron oxide particles 12, and the iron oxide particles 12 and the iron carbide particles 11 can be brought into contact with each other. Thereby, as described above, in a temperature range of 800°C or lower in the blast furnace, a direct reduction reaction using iron carbide and iron oxide can proceed.

The agglomerated ore according to the present embodiment is preferably used in a blast furnace, but can also be used in a converter, an electric furnace and the like.

[Examples]

Next, examples of the present invention will be described, but the present invention is not limited thereto.

(Raw material ore)

As a raw material ore, a pellet A (1.0 kg) having a chemical composition shown in the following Table 1 was used.

[Table 1]

| T. Fe | FeO | SiO$_2$ | Al$_2$O$_3$ | CaO | MgO | C/S |
|-------|-----|---------|-------------|-----|-----|-----|
| 65.57 | 1.29 | 2.63 | 0.78 | 2.04 | 0.09 | 0.78 |
| | | | | | | unit: mass% |

(Reduction step)

Using a fixed bed electric furnace, the raw material ore (pellet A) was reduced. Reduction conditions are shown in the following Table 2. When the ratio R was determined for the reduced ore after the reduction step was performed, the ratio R was 70%. When the treatment time of the reduction step in Table 2 was 10 min, the ratio R was 30% (Comparative Example 4-3). In addition, when the treatment time of the reduction step in Table 2 was 90 min, the ratio R was 90% (Comparative Example 4-4).

[Table 2]

| Composition of reducing gas | H$_2$ gas (90 vol%) and N$_2$ gas (10 vol%) |
|------------------------------|---------------------------------------------|
| Temperature of reducing gas | 980°C |
| Treatment time of reduction step | 45 min |

(Carbonization step)

The reduced ore produced in the reduction step was carbonized using a fixed bed electric furnace. Carbonization conditions are shown in the following Table 3. In this example, the treatment time was set at (three) temperatures shown in the following Table 3. Specifically, in the case of 500°C, the treatment time of the carbonization step was 30 min, 45 min, 60 min, 90 min, 105 min, and 120 min. In the case of 550°C, the treatment time of the carbonization step was 10 min, 20 min, 30 min, 60 min, 70 min, 90 min, and 120 min. In the case of 600°C, the treatment time of the carbonization step was 5 min, 10 min, 20 min, 30 min, 60 min, 90 min, and 120 min. Here, the temperatures in Table 3 are maximum temperatures in the fixed bed electric furnace. The temperature measurement position was 1 cm directly above the reduced ore installed in the fixed bed electric furnace. The time from when the temperature shown in Table 3 (the temperature of the carbonizing gas) in a $N_2$ environment becomes stable and switching to a carbonizing gas is performed until the carbonizing gas is stopped and switching to $N_2$ is performed is defined as the treatment time.

[Table 3]

| Composition of carbonizing gas | CO gas (80 vol%) and $N_2$ gas (20 vol%) |
|---|---|
| Temperature of carbonizing gas | 500°C, 550°C, 600°C |

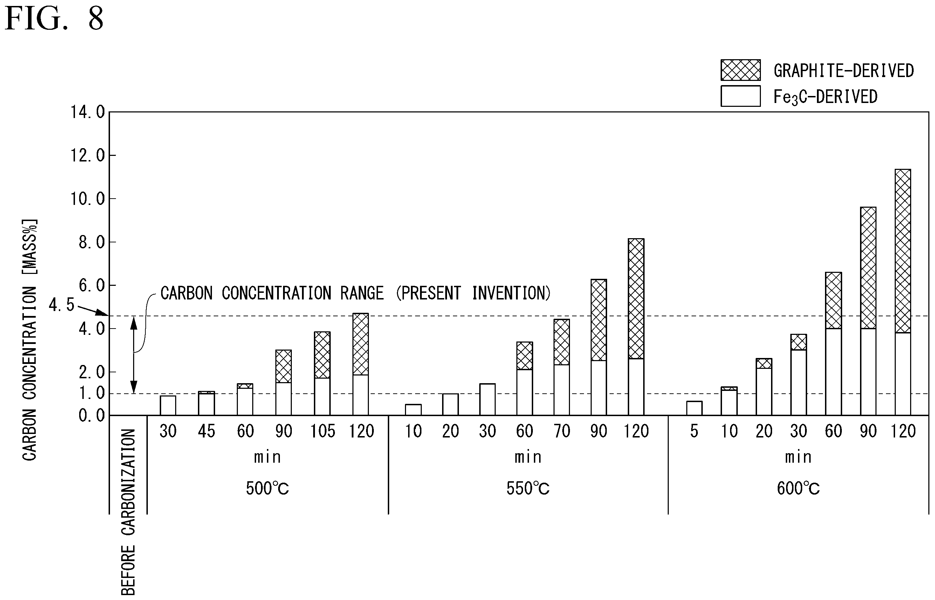

The carbon concentration was measured for the carbonized ore produced in the carbonization step and the reduced ore before the carbonization step was performed. The carbon concentration was measured according to standards of JIS Z 2615 (2015) (gas volumetric method). The following Table 4 shows the carbon concentrations under respective carbonization conditions. In the following Table 4, those included in the present invention were defined as examples, those not included in the present invention were defined as comparative examples, and one before the carbonization step was performed was defined as a reference example. As can be seen from the following Table 4, when carbonization conditions were appropriately set, the carbon concentration could be 1.0 mass% or more and 4.5 mass% or less. FIG. 8 shows the amounts of the following Table 4 as bar graphs.

[Table 4]

| Carbonizing conditions | | Carbon concentration [mass%] | | | |
|---|---|---|---|---|---|
| temperature [°C] | treatment time [min] | Total | $Fe_3C$-derived | graphite-derived | |
| 500 | 30 | 0.9 | 0.9 | 0 | Comparative Example |
| | 45 | 1.1 | 1 | 0.1 | Example |
| | 60 | 1.4 | 1.2 | 0.2 | Example |
| | 90 | 3 | 1.5 | 1.5 | Example |
| | 105 | 3.8 | 1.7 | 2.1 | Example |
| | 120 | 4.6 | 1.8 | 2.8 | Comparative Example |
| 550 | 10 | 0.5 | 0.5 | 0 | Comparative Example |
| | 20 | 1 | 1 | 0 | Example |
| | 30 | 1.4 | 1.4 | 0 | Example |
| | 60 | 3.3 | 2.1 | 1.2 | Example |
| | 70 | 4.4 | 2.3 | 2.1 | Example |
| | 90 | 6.2 | 2.5 | 3.7 | Comparative Example |
| | 120 | 8.1 | 2.6 | 5.5 | Comparative Example |
| 600 | 5 | 0.6 | 0.6 | 0 | Comparative Example |
| | 10 | 1.2 | 1.1 | 0.1 | Example |
| | 20 | 2.5 | 2.1 | 0.4 | Example |
| | 30 | 3.7 | 3 | 0.7 | Example |
| | 60 | 6.6 | 4 | 2.6 | Comparative Example |
| | 90 | 9.7 | 4 | 5.7 | Comparative Example |
| | 120 | 11.4 | 3.8 | 7.6 | Comparative Example |
| Before carbonization step | | 0 | 0 | 0 | Reference Example |

The following treatment was performed using the reduced ore as the reference example shown in Table 4 and the carbonized ore (carbon concentration (total): 1.4 mass%) as an example, which had been subjected to a carbonization treatment at a temperature of 550°C for a treatment time of 30 minutes. In addition, the following treatment was performed using the carbonized ore (carbon concentration (total): 0.5 mass%) as Comparative Example 4-1, which had been subjected to a carbonization treatment at a temperature of 550°C for a treatment time of 10 minutes. The following treatment was performed using the carbonized ore (carbon concentration (total): 4.6 mass%) as Comparative Example 4-2, which had been subjected to a carbonization treatment at a temperature of 500°C for a treatment time of 120 minutes. As Comparative Example 4-3, a carbonized ore with a ratio R of 30 mass% and a carbon concentration (total) of 1.4 mass% was produced by changing conditions of the reduction step and the carbonization step, and subjected to the following treatment. As Comparative Example 4-4, a carbonized ore with a ratio R of 90 mass% and a carbon concentration (total) of 1.4 mass% was subjected to the following treatment by changing conditions of the reduction step and carbonization step.

(Crushing step)

Using a ball mill, the reduced ore and the carbonized ore were crushed. The crushed particles were sieved using a sieve with a sieve size of 0.5 mm.

(Briquetting step)

After sieving in the crushing step, the particles under the sieve (particles with a maximum diameter of 0.5 mm or less) were mixed and then subjected to a briquetting step. In the briquetting step, using a double-roll compression briquetting machine (with a roll diameter of 700 mm and a roll width of 650 mm), about 7 cc (volume) of a pillow type briquette (molded product) was molded. As Comparative Example 4-5, a carbonized ore (carbon concentration (total): 1.4 mass%) that had been subjected to a carbonization treatment at a temperature of 550°C for a treatment time of 30 minutes was crushed as described above, briquetting conditions after crushing were changed, and a pillow type briquette was molded so that the porosity was 10%. As Comparative Example 4-6, a carbonized ore (carbon concentration (total): 1.4 mass%) that had been subjected to a carbonization treatment at a temperature of 550°C for a treatment time of 30 minutes and crushed as described above, briquetting conditions after crushing were changed, and a pillow type briquette was molded so that the porosity was 50%. Here, in Comparative Examples 4-1 to 4-4, briquetting conditions after crushing were changed and a pillow type briquette was molded so that the porosity was 30%. When the agglomerated ore of the example was analyzed by EDS, it was confirmed that at least some of the iron oxide particles were exposed on the surface layer of the agglomerated ore.

(Quality test method)

The porosity, crushing strength, ratio R and reducibility of the pillow type briquette were measured. The porosity was measured according to standards of JIS M 8716 (1990). The crushing strength was measured according to standards of JIS Z 8841 (1993). The ratio R was determined from Formula (1).

The reducibility was evaluated according to standards of JIS M 8713, and JIS-RI (achieved JIS reduction rate) was measured. The reduction rate was a proportion of oxygen removed from iron oxide after a predetermined reduction time had elapsed, and the ratio of the removed oxygen to oxygen combined with iron before reduction.

In the reducibility evaluation, the reduction temperature was 900°C, the reduction time was 180 min, and a mixed gas of CO gas (30 vol%) and $N_2$ gas (70 vol%) was used as the reducing gas. The following Table 5 shows the quality evaluation results.

[Table 5]

|  | Production step | Porosity [%] | Crushing strength [daN] | R [%] | JIS-RI [mass%] |
|---|---|---|---|---|---|
| Example | reduction-> carbonization->crushing->briquetting | 31 | 200 | 75 | 98 |
| Reference Example | reduction->crushing->briquetting | 27 | 215 | 74 | 92 |

(Evaluation of reducibility)

As can be seen from Table 5, the JIS-RI was 92 mass% in the reference example, but the JIS-RI was 98 mass% in the example. In addition, in Comparative Examples 4-1 to 4-6 that did not satisfy any of the conditions of the porosity, the carbon concentration and the ratio R, the JIS-RI was less than 95 mass%. Therefore, the reducibility of the examples could be further improved than the reference example and Comparative Examples 4-1 to 4-6.

[Brief Description of the Reference Symbols]

100, 200 Shaft furnace
101, 104, 201, 205 Cooler
102, 105, 204, 206 Compressor
103, 203 Heater
106, 202, 207 Membrane separator

## Claims

1. An agglomerated ore that is a molded product obtained by mixing a plurality of types of particles,

   wherein the plurality of types of particles include at least iron carbide particles and iron oxide particles,
   wherein at least some of the iron oxide particles are exposed on a surface layer of the agglomerated ore,
   wherein the porosity of the agglomerated ore is 20% or more and 40% or less,
   wherein a ratio of a total mass of metallic iron and iron in iron carbide to a mass of total iron contained in the agglomerated ore is 40 mass% or more and 80 mass% or less, and
   wherein the concentration of carbon including carbon in the iron carbide particles is 1.0 mass% or more and 4.5 mass% or less.

2. The agglomerated ore according to claim 1,
   wherein the plurality of types of particles include metallic iron particles.

3. A method for producing an agglomerated ore, comprising:

   a reduction step in which a raw material ore is reduced to produce a reduced ore in which a ratio of a total mass of metallic iron and iron in iron carbide to a mass of total iron is 40 mass% or more and 80 mass% or less;
   a carbonization step in which the reduced ore is carbonized to produce a carbonized ore having a carbon concentration of 1.0 mass% or more and 4.5 mass% or less;
   a crushing step in which the carbonized ore is crushed, and the crushed carbonized ore is separated using a sieve mesh with a sieve size of 0.5 mm, and at least iron carbide particles and iron oxide particles are produced; and
   a briquetting step in which at least iron carbide particles and iron oxide particles are mixed and molded using a briquetting machine to produce an agglomerated ore having a porosity of 20% or more and 40% or less.

4. The method for producing an agglomerated ore according to claim 3.
   wherein, in the crushing step, in addition to the iron carbide particles and iron oxide particles, metallic iron particles are produced.

5. The method for producing an agglomerated ore according to claim 3 or 4,
   wherein the reduction step and the carbonization step are performed in one shaft furnace.

# FIG. 1

```
        START
          │
          ▼               S101
┌─────────────────────┐
│   REDUCTION STEP OF  │
│   RAW MATERIAL ORE   │
└─────────────────────┘
          │
          ▼               S102
┌─────────────────────┐
│   CARBONIZATION STEP │
│    OF REDUCED ORE    │
└─────────────────────┘
          │
          ▼               S103
┌─────────────────────┐
│    CRUSHING STEP OF  │
│    CARBONIZED ORE    │
└─────────────────────┘
          │
          ▼               S104
┌─────────────────────┐
│ BRIQUETTING STEP OF PARTICLES │
└─────────────────────┘
          │
          ▼
         END
```

# FIG. 2

FIG. 3

FIG. 4

## FIG. 5

## FIG. 6

FIG. 7

FIG. 8

EP 4 407 054 A1

## INTERNATIONAL SEARCH REPORT

| International application No. |
| --- |
| **PCT/JP2022/035380** |

| A. CLASSIFICATION OF SUBJECT MATTER |
| --- |
| *C22B 1/16*(2006.01)i; *C21B 13/02*(2006.01)i; *C22B 1/14*(2006.01)i<br>FI: C22B1/16 101; C21B13/02; C22B1/14; C22B1/16 K; C22B1/16 N |
| According to International Patent Classification (IPC) or to both national classification and IPC |

| B. FIELDS SEARCHED |
| --- |
| Minimum documentation searched (classification system followed by classification symbols)<br>C22B1/16; C21B13/02; C22B1/14 |
| Documentation searched other than minimum documentation to the extent that such documents are included in the fields searched<br>Published examined utility model applications of Japan 1922-1996<br>Published unexamined utility model applications of Japan 1971-2022<br>Registered utility model specifications of Japan 1996-2022<br>Published registered utility model applications of Japan 1994-2022 |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 58-117839 A (SHIN NIPPON SEITETSU KK) 13 July 1983 (1983-07-13)<br>entire text | 1-5 |
| A | JP 10-007414 A (HAYASHI, Shoji) 13 January 1998 (1998-01-13)<br>entire text | 1-5 |
| A | JP 10-291816 A (SHIN NIPPON SEITETSU KK) 04 November 1998 (1998-11-04)<br>entire text | 1-5 |
| A | JP 2004-269978 A (KOBE STEEL, LTD.) 30 September 2004 (2004-09-30)<br>entire text | 1-5 |
| A | WO 00/49184 A1 (DANIELI & C. OFFICINE MECCANICHE S.P.A.) 24 August 2000<br>(2000-08-24)<br>entire text | 1-5 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 October 2022** | **01 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/035380**

| Patent document cited in search report | | | Publication date (day/month/year) | Patent family member(s) | | | Publication date (day/month/year) |
|---|---|---|---|---|---|---|---|
| JP | 58-117839 | A | 13 July 1983 | (Family: none) | | | |
| JP | 10-007414 | A | 13 January 1998 | US entire text | 6004373 | A | |
| JP | 10-291816 | A | 04 November 1998 | (Family: none) | | | |
| JP | 2004-269978 | A | 30 September 2004 | US entire text | 2006/0278040 | A1 | |
| | | | | EP | 1602737 | A1 | |
| | | | | CN | 1759192 | A | |
| WO | 00/49184 | A1 | 24 August 2000 | IT | UD990031 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021155671 A
- JP 2014080649 A
- JP H8253801 A